# DEMANDE DE BREVET EUROPEEN

(11) **EP 1 120 029 A1**
(43) Date de publication de la demande: **01.08.2001**
(21) Numéro de dépôt: 01440011.3
(22) Date de dépôt: 24.01.2001
(51) Int. Cl.: A01G 9/02, A01G 27/04

(54) **Conteneur de fleurissement**

(30) Priorité: 25.01.2000 FR 0000888
(71) Demandeur: Grisier, Didier, 25250 L'Isle sur le Doubs (FR)
(72) Inventeur: Grisier, Didier, 25250 L'Isle sur le Doubs (FR)
(74) Mandataire: Nithardt, Roland

(57) **Abrégé**

La présente invention concerne un conteneur de fleurissement simple, économique, adaptable à différents types de plante et permettant une répartition des fleurs en volume autour dudit conteneur.

Le conteneur de fleurissement (1) est caractérisé en ce que son bac (2) comporte une paroi extérieure (4) solidaire d'un fond (3) et une paroi intérieure (5) mobile en rotation autour de son axe à l'intérieur dudit bac. Des ouvertures (6, 7) identiques sont ménagées dans les parois (4, 5) de sorte que, lorsqu'elles sont en regard, elles définissent des alvéoles (8) agencées pour recevoir des plantes. La rotation relative de la paroi intérieure (5) par rapport à la paroi extérieure (4) permet d'ouvrir ou de fermer plus ou moins ces alvéoles (8) afin de les adapter aux plantes mises en place et d'assurer un bon maintien du substrat de culture. Application: horticulture.

## Description

La présente invention concerne un conteneur de fleurissement constitué d'un bac pourvu au moins d'un fond et d'une paroi latérale périphérique.

Dans le domaine du fleurissement des plantes en pot, la publication FR-A-2.763.210 du même titulaire apporte une solution originale permettant avec un bac unique, polyvalent, adaptable à différents types de plantes, de réaliser tout au long de l'année des compositions florales bien équilibrées et de très belle qualité, dans un volume de substrat suffisant et avec une irrigation adéquate. Ce bac polyvalent comporte des parois latérales amovibles, chacune pourvue d'une ou de plusieurs ouvertures de forme et de dimension adaptées à chaque type de plante. Il est donc parfaitement adapté aux professionnels du fleurissement et trouve ses applications principales dans les villes et les communes.

Le particulier n'a pas les mêmes exigences ni les mêmes budgets que les professionnels. On a donc cherché à apporter également une solution originale et satisfaisante pour l'usage domestique et la vente par exemple en grande surface au prix du marché, les objectifs mentionnés ci-dessus restant les mêmes.

La présente invention vise à apporter cette solution, en proposant un bac unique, simple et économique, adaptable à différents types de plantes, tombantes ou non, permettant de réaliser des compositions florales équilibrées et de qualité, avec une irrigation adaptée.

Dans ce but, l'invention concerne un conteneur de fleurissement tel que défini en préambule, caractérisé en ce que la paroi latérale périphérique est formée d'une double paroi, définissant une paroi extérieure et une paroi intérieure, les deux parois étant constituées de deux surfaces de révolution coaxiales, ces deux parois étant mobiles en rotation l'une par rapport à l'autre autour de leur axe commun, et chacune des parois comportant au moins une ouverture, ces ouvertures étant agencées de telle manière qu'elles soient au moins partiellement superposables au cours de la rotation pour former une alvéole destinée à recevoir une plante, la surface de cette alvéole étant variable en fonction de la position relative des deux ouvertures.

Ces parois comportent, avantageusement, des formes complémentaires agencées pour assurer un guidage en rotation desdites parois.

Dans une forme de réalisation préférée de l'invention, l'une des parois est fixe et solidaire du fond et l'autre paroi est mobile en rotation.

Par exemple, la paroi intérieure peut comporter à son bord supérieur une rainure périphérique extérieure destinée à recevoir le bord supérieur de la paroi extérieure et le fond du bac peut comporter une rainure intérieure périphérique destinée à recevoir le bord inférieur de la paroi intérieure.

D'une manière avantageuse, le fond comporte un double fond intérieur amovible, délimitant une réserve d'eau, et des mèches de drainage s'étendant de la réserve d'eau à l'intérieur du bac, à travers des orifices prévus dans le double fond, pour remonter l'eau par capillarité afin d'assurer une irrigation automatique du substrat contenu dans le bac.

Ce conteneur de fleurissement peut comporter des moyens de fixation à un support, ces moyens pouvant comporter, par exemple, au moins un mât de suspension central dont l'extrémité libre émerge de la partie supérieure du bac et porte un système d'attache permettant un accrochage suspendu.

Ces moyens de fixation peuvent aussi comporter une couronne d'accrochage extérieure disposée en partie supérieure dudit bac destinée à recevoir une suspente à crochets.

De préférence, ledit conteneur comporte également un couvercle amovible ajouré formant des ouvertures.

Les ouvertures, prévues dans les parois et le couvercle peuvent avoir une forme choisie parmi le groupe comprenant au moins : une forme carrée, rectangulaire, circulaire, ovale, en arc de cercle, en secteur angulaire, lenticulaire, en tuile, en L, en étoile, en coeur.

La présente invention et ses avantages apparaîtront mieux dans la description suivante d'un exemple de réalisation et en référence aux dessins annexés, dans lesquels:

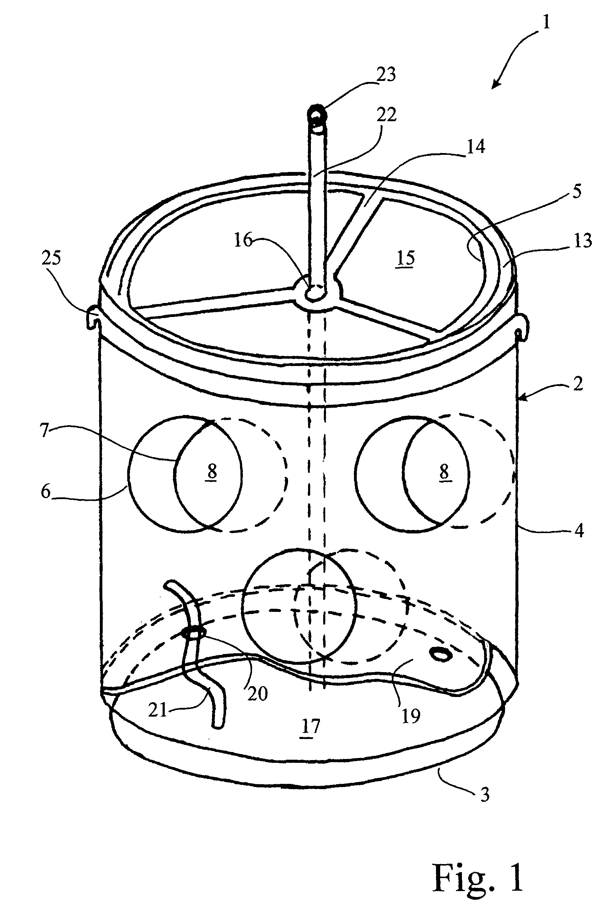

- la figure 1 est une vue en perspective, partiellement coupée, d'un exemple de réalisation du conteneur de fleurissement selon l'invention, et
- la figure 2 est une vue en coupe axiale du conteneur de la figure 1.

En référence aux figures, la présente invention concerne un conteneur de fleurissement 1 constitué d'un bac 2 comportant un fond 3 et une paroi latérale périphérique. Cette paroi latérale périphérique a la particularité d'être constituée d'une double paroi 4 et 5 définissant une paroi extérieure 4 et une paroi intérieure 5. Ces deux parois 4 et 5 sont constituées de deux surfaces de révolution coaxiales et sont mobiles en rotation l'une par rapport à l'autre autour de leur axe commun. Dans l'exemple illustré, ces parois sont cylindriques mais peuvent être partiellement sphériques, tronconiques ou obtenues à partir d'une surface gauche de révolution.

Ces parois 4 et 5 comportent respectivement des ouvertures 6 et 7 agencées de telle manière qu'elles soient au moins partiellement superposables au cours de la rotation desdites parois pour former des alvéoles 8 destinées à recevoir des plantes. Ainsi, en modifiant la position angulaire des parois 4 et 5 l'une par rapport à l'autre, on ouvre ou on ferme progressivement les alvéoles 8. Dans l'exemple illustré, ces ouvertures 6 et 7 sont cylindriques et disposées en quinconce, mais peuvent avoir des formes et des dimensions variées et peuvent aussi être disposées et réparties différemment.

Dans l'exemple illustré, la paroi extérieure 4 est fixe et solidaire du fond 3 et la paroi intérieure 5 est mobile en rotation. On peut également imaginer l'inverse : la paroi intérieure est fixe et solidaire du fond et la paroi extérieure est mobile en rotation. Ces parois 4 et 5 comportent des formes complémentaires coopérant pour assurer le guidage en rotation de la paroi intérieure 5. Ces formes complémentaires peuvent être celles correspondantes aux deux surfaces de révolution si elles sont formées de deux surfaces qui assurent simultanément un guidage axial et un guidage radial. Mais, dans ce cas, les parois 4 et 5 doivent être réalisées en au moins deux parties emboîtables pour pouvoir les monter l'une dans l'autre.

Plus simplement, dans l'exemple représenté, la paroi intérieure 5 comporte à son bord supérieur une rainure périphérique extérieure 9 qui coiffe le bord supérieur 10 de la paroi extérieure 4. Ainsi, cette rainure 9 constitue un premier moyen de guidage en rotation. Dans le fond 3 du bac 2, une rainure périphérique intérieure 11 reçoit le bord inférieur 12 de la paroi intérieure 5 et forme un second moyen de guidage en rotation. Ainsi, la paroi intérieure 5 se glisse à l'intérieur du bac 2 pour former un volume intérieur unique, fermé et étanche, pouvant recevoir un substrat de culture, tel que des tourbes, des terreaux, des mottes de terre, etc. et tout autre support de culture organique ou non organique.

Le bord supérieur de la paroi intérieure 5 forme, dans cette réalisation, un couvercle 13 ajouré destiné à recevoir également des plantations. Ce couvercle 13 comporte trois rayons 14 séparant la surface dudit couvercle en trois secteurs angulaires égaux formant des ouvertures 15. Néanmoins, il peut présenter une forme et des dimensions différentes ainsi qu'un nombre différent d'ouvertures 15. Il comporte au centre des trois rayons 14 un orifice de passage 16 pour un mât central décrit plus loin.

Ce conteneur de fleurissement 1 comporte un dispositif d'arrosage intégré permettant de maintenir un taux d'humidité optimal à l'intérieur du bac 2 pour une bonne croissance des plantes et facilitant ainsi l'arrosage. A cet effet, le fond 3 du bac 2 comporte une réserve d'eau 17 délimitée par un rebord 18 solidaire du fond 3 et un double fond 19 amovible. Ce double fond 19 est perforé de plusieurs orifices 20 destinés à recevoir des mèches de drainage 21 s'étendant de la réserve d'eau 17 à l'intérieur du bac 2 pour irriguer le substrat de culture disposé dans le bac 2 par capillarité. Le double fond 19 peut être tapissé d'un tapis réalisé dans la même matière que les mèches de drainage. Néanmoins, ce double fond 19 est amovible et peut être retiré pour augmenter le volume intérieur du bac 2, le cas échéant.

Le remplissage de cette réserve d'eau 17 s'effectue lors des arrosages en partie supérieure du bac 2. Le surplus d'eau est collecté automatiquement dans la réserve d'eau 17 en passant par les orifices 20 des mèches de drainage 21. Cette réserve d'eau 17 est complétée par un orifice de trop plein 17' prévu en partie haute de la réserve, juste sous le double fond 19 et permettant l'écoulement à l'extérieur du surplus d'eau généré par des arrosages abusifs.

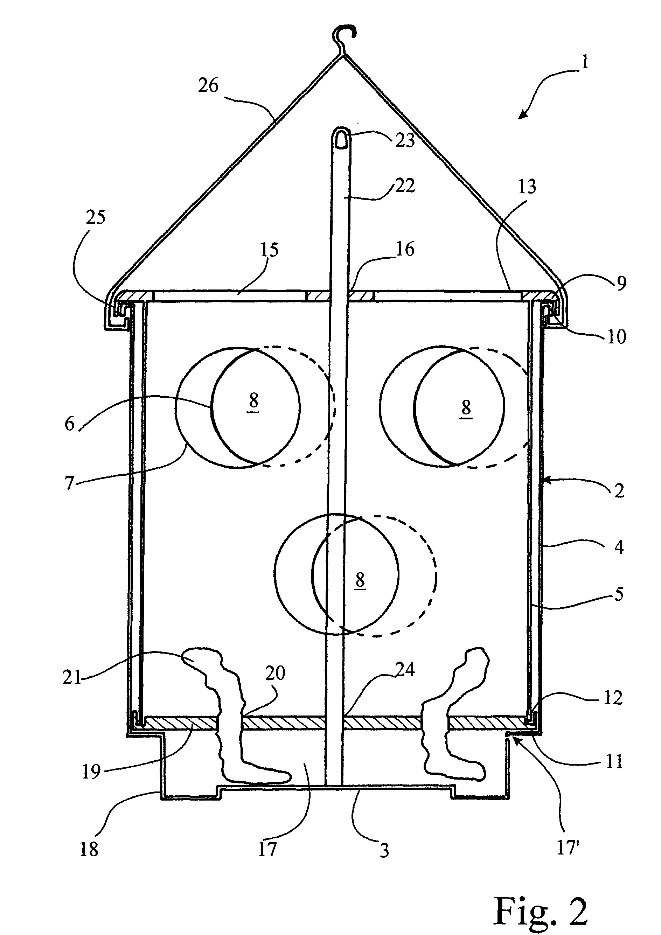

Dans l'exemple illustré en figure 2, la rainure périphérique intérieure 11 est ménagée directement sur le double fond 19 qui déborde radialement du fond 3.

Le conteneur de fleurissement 1 peut être utilisé soit posé sur un support, soit suspendu à un support. A cet effet, il comporte des moyens de fixation par suspension à ce support. Ces moyens de fixation comportent un mât de suspension 22 solidaire du fond 3 du bac 2. L'extrémité libre de ce mât de suspension 22 émerge suffisamment en partie supérieure du bac 2 et porte un système d'attache 23 adapté audit support. Ce mât de suspension 22 traverse par conséquent le double fond 19 par un orifice 24 et le couvercle 13 par l'orifice 16.

Ces moyens de fixation peuvent également comporter une couronne d'accrochage 25 disposée à proximité du couvercle 13 et pouvant recevoir une suspente 26 à trois crochets, par exemple, telle que disponible dans le commerce. Cette couronne d'accrochage 25 peut être obtenue directement par le bord supérieur 10 de la paroi extérieure 4 qui est replié vers l'extérieur et qui coopère avec la rainure 9 de la paroi intérieure 5.

L'utilisation du conteneur de fleurissement 1 est décrite à présent. La paroi intérieure 5 est tournée à l'intérieur de la paroi extérieure 4 pour amener les ouvertures 7 en regard des ouvertures 6 de la paroi extérieure 4. Les alvéoles 8 sont, dans cette position, maximales et permettent la mise en place par plantation de toutes sortes de plantes tombantes ou non. Après cette mise en place, une légère rotation de la paroi intérieure 5 permet de refermer partiellement les alvéoles 8 afin de retenir correctement les plantes par leurs mottes afin qu'elles ne puissent ni tomber, ni être arrachées. Cette astuce de construction du conteneur 1 permet aussi de limiter les coulées d'eau et de terre lors des arrosages trop généreux mais également de limiter les attaques climatologiques comme le dessèchement occasionné par les rayons du soleil et par le vent, ou l'inondation du substrat occasionnée par la pénétration des eaux de pluie. Le couvercle 13 du conteneur 1 étant ajouré, il est également possible de mettre en place des plantes dans les ouvertures 15 augmentant ainsi le volume du fleurissement, favorisant l'équilibre et la beauté de la composition florale. Une fois le conteneur de fleurissement garni, il peut être, selon les plantes, posé ou suspendu à tout support grâce à son mât de suspension 22 ou à sa couronne d'accrochage 25.

On a vu que l'ouverture et la fermeture des alvéoles 8 sont progressives suivant le déplacement angulaire de la paroi intérieure 5 par rapport à la paroi extérieure 4. Ainsi, ces alvéoles 8 peuvent avoir une dimension plus ou moins importante suivant la dimension des mottes des plantes mises en place. Ceci permet aussi bien une mise en place précoce de culture avec des boutures ou des micro-mottes, qu'une mise en place tardive de plantes en pot, de diamètre plus important, déjà bien formées et terminées donnant un effet de fleurissement immédiat.

Il apparaît clairement de cette description que la présente invention atteint les buts fixés. Notamment, elle permet des utilisations variées en même temps qu'une liberté et une optimisation de la répartition des plantes fleuries selon le type de plante et selon les saisons, en fonction des alvéoles utilisées et de l'ouverture de ces alvéoles. De plus, de tels conteneurs peuvent être fabriqués à moindre coût à partir de matière plastique rigide renforcée contre les rayons ultraviolets, ce qui les rendent à la fois léger, résistant mécaniquement et vis-à-vis du rayonnement solaire, faciles à entretenir. Pour augmenter encore le volume de fleurissement, ces conteneurs peuvent être regroupés, et notamment superposés.

La présente invention n'est pas limitée à l'exemple de réalisation décrit mais s'étend à toute modification et variante évidentes pour un homme du métier. Notamment, la forme et les dimensions du conteneur peuvent varier, de même que le nombre, la forme et la disposition des ouvertures ménagées dans les parois intérieure et extérieure et dans le couvercle.

## Revendications

1. Conteneur de fleurissement (1) constitué d'un bac (2) pourvu au moins d'un fond (3) et d'une paroi latérale périphérique, caractérisé en ce que la paroi latérale périphérique est formée d'une double paroi, définissant une paroi extérieure (4) et une paroi intérieure (5), les deux parois étant constituées de deux surfaces de révolution coaxiales, ces deux parois étant mobiles en rotation l'une par rapport à l'autre autour de leur axe commun, et chacune des parois comportant au moins une ouverture (6, 7), ces ouvertures étant agencées de telle manière qu'elles soient au moins partiellement superposables au cours de la rotation pour former une alvéole (8) destinée à recevoir une plante, la surface de cette alvéole (8) étant variable en fonction de la position relative des deux ouvertures (6, 7).

2. Conteneur selon la revendication 1, caractérisé en ce que ces parois (4, 5) comportent des formes complémentaires agencées pour assurer un guidage en rotation desdites parois.

3. Conteneur selon la revendication 2, caractérisé en ce qu'une des parois (4, 5) est fixe et solidaire du fond (3) et en ce que l'autre paroi (5, 4) est mobile en rotation.

4. Conteneur selon la revendication 3, caractérisé en ce que la paroi intérieure (5) comporte à son bord supérieur une rainure périphérique extérieure (9) destinée à recevoir le bord supérieur (10) de la paroi extérieure (4).

5. Conteneur selon la revendication 3, caractérisé en ce que le fond (3) du bac (2) comporte une rainure intérieure périphérique (11) destinée à recevoir le bord inférieur (12) de la paroi intérieure (5).

6. Conteneur selon la revendication 1, caractérisé en ce que le fond (3) comporte un double fond intérieur amovible (19), délimitant une réserve d'eau (17), et des mèches de drainage (21) s'étendant de la réserve d'eau (17) à l'intérieur du bac (2), à travers des orifices (20) prévus dans le double fond (19), pour remonter l'eau par capillarité.

7. Conteneur selon l'une quelconque des revendications 1 à 6, caractérisé en ce qu'il comporte des moyens de fixation à un support.

8. Conteneur selon la revendication 7, caractérisé en ce que ces moyens de fixation comportent au moins un mât de suspension central (22) dont l'extrémité libre émerge de la partie supérieure du bac (2) et porte un système d'attache (23) permettant un accrochage suspendu.

9. Conteneur selon la revendication 7, caractérisé en ce que les moyens de fixation comportent une couronne d'accrochage extérieure (25) disposée en partie supérieure dudit bac (2) destinée à recevoir une suspente à crochets.

10. Conteneur selon la revendication 1, caractérisé en ce que qu'il comporte un couvercle amovible ajouré (13) formant des ouvertures (15).

11. Conteneur selon les revendications 1 et 10, caractérisé en ce que lesdites ouvertures (6, 7, 15) ont une forme choisie parmi le groupe comprenant au moins : une forme carrée, rectangulaire, circulaire, ovale, en arc de cercle, en secteur angulaire, lenticulaire, en tuile, en L, en étoile, en coeur.
